# FASCICULE DE BREVET EUROPEEN

(11) **EP 1 799 984 B1**
(45) Date de publication et mention de la délivrance du brevet: **12.08.2009**
(21) Numéro de dépôt: 05807299.2
(22) Date de dépôt: 22.09.2005
(51) Int. Cl.: F02D 17/04, F02D 41/04

(54) **PROCEDE DE COMMANDE D'ARRET AUTOMATIQUE D'UN VEHICULE**
VERFAHREN ZUR AUTOMATISCHEN STOPPKONTROLLE EINES FAHRZEUGS
AUTOMATIC VEHICLE STOP CONTROL METHOD

(30) Priorité: 23.09.2004 FR 0410094
(43) Date de publication de la demande: 27.06.2007
(73) Titulaire: VALEO EQUIPEMENTS ELECTRIQUES MOTEUR, 94017 Créteil Cedex (FR)
(72) Inventeur: LECOLE, Brice, F-75012 Paris (FR); LAURENCE, Magali, F-75012 PARIS (FR)
(74) Mandataire: de Lambilly Delorme, Marie Pierre
(86) Numéro de dépôt international: PCT/FR2005/002353
(87) Numéro de publication internationale: WO 2006/032793

(56) Documents cités:
- EP-A- 1 052 399
- EP-A- 1 059 441
- EP-A- 1 396 622
- EP-A- 1 469 195
- US-A- 4 381 042
- US-A1- 2003 087 724

## Description

### Domaine de l'invention

La présente invention concerne un procédé de commande d'arrêt d'un moteur thermique d'un véhicule.

### Etat de la technique

Le procédé de commande permet de mettre en oeuvre pour le moteur thermique un fonctionnement à coupure et démarrages (incluant les redémarrages) automatiques dudit moteur thermique, fonctionnement connu sous le terme anglo-saxon de « Stop and Go ».

A cet effet, le procédé de commande, sous certaines conditions, provoque l'arrêt complet du moteur thermique lorsque le véhicule est lui-même à l'arrêt, puis redémarre le moteur thermique à la suite, par exemple, d'une action du conducteur interprétée comme une demande de redémarrage. Ainsi, le procédé de commande d'arrêt comporte également généralement une commande de démarrage. Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré notamment au moyen d'une machine électrique tournante à la suite d'une détection de l'enfoncement de la pédale d'embrayage par le conducteur ou de toute autre action qui peut être interprétée comme la volonté du conducteur de redémarrer son véhicule. On comprend ainsi l'intérêt de ce fonctionnement en « Stop and Go » en terme d'économie d'énergie et de réduction de la pollution, surtout en milieu urbain. La demande de brevet EP-1052399 montre un exemple d'un fonctionnement en «Stop and Go».

Cependant, cette circonstance de mise en oeuvre du fonctionnement en « Stop and Go » reste très particulière et ne recouvre pas toutes les situations où la commande d'arrêt automatique peut être sollicitée.

### Objet de l'invention

Aussi, un problème technique à résoudre par l'objet de la présente invention est de proposer un procédé de commande d'arrêt d'un moteur thermique d'un véhicule automobile, qui permette de définir les conditions dans lesquelles un ordre d'arrêt du moteur thermique du véhicule, initialement en mouvement, peut être établi dans le contexte d'un fonctionnement en « Stop and Go ».

Une solution au problème technique posé consiste, selon un premier objet de la présente invention, en ce que le procédé de commande comporte les étapes de :
- décider de l'arrêt dudit moteur thermique en fonction, d'une part, de conditions dites stationnaires, sensiblement stables avant une phase d'arrêt, et, d'autre part, de conditions dites variables, susceptibles d'évoluer après un test positif sur les conditions stationnaires et avant une phase d'arrêt, et
- tester lesdites conditions stationnaires préalablement aux conditions variables.
- ouvrir une fenêtre de surveillance de la vitesse du moteur thermique de durée donnée suite à un ordre d'arrêt dudit moteur thermique.

Ainsi, l'invention distingue deux grandes catégories de conditions d'arrêt du moteur thermique qui doivent être cumulativement vérifiées pour déclencher un ordre d'arrêt du moteur thermique et donc une exécution d'une phase d'arrêt.

Lesdites conditions stationnaires sont peu susceptibles de modification entre le moment où elles sont vérifiées et l'envoi d'un ordre d'arrêt, ces conditions peuvent donc être testées en premier lieu sachant qu'il est peu probable qu'elles soient remises en cause ultérieurement. Leur vérification constitue donc une étape préalable à la prise de décision d'un arrêt du moteur thermique.

Lesdites conditions variables peuvent, à l'inverse, évoluer tout le temps. Il se peut en effet qu'elles deviennent vraies, et provoquer un ordre d'arrêt, alors qu'initialement elles ne l'étaient pas. C'est pourquoi ces conditions doivent être testées en dernier lieu, après avoir vérifié que les conditions stationnaires sont vraies.

Selon des modes de réalisation préférentiels non limitatifs, l'invention prévoit les caractéristiques suivantes.

Dans une étape supplémentaire, on prévoit d'exécuter une phase d'arrêt si les conditions variables sont vraies.

Cette classification des conditions d'arrêt en conditions stationnaires et conditions variables permet par ailleurs d'envisager un mode de mise en oeuvre de l'invention selon lequel après un test positif desdites conditions stationnaires, on émet un signal d'avertissement destiné à informer d'un probable arrêt du moteur thermique.

On tire ainsi parti de la stabilité dans le temps des conditions stationnaires pour avertir précocement le conducteur du véhicule que le moteur thermique est susceptible d'être arrêté à tout moment.

Ensuite, l'invention prévoit qu'après émission dudit signal d'avertissement, on teste à nouveau lesdites conditions stationnaires, préalablement au test des conditions variables. Cette précaution est prise de manière à s'assurer que les conditions stationnaires n'ont pas évoluées au cours de l'émission du signal d'avertissement, même si cette évolution est peu probable.

Selon l'invention, ledit signal d'avertissement est un signal lumineux, lequel peut par exemple être produit par des diodes électroluminescentes clignotantes.

Conformément à l'invention, les conditions stationnaires comprennent, séparément ou en combinaison, des conditions dites comportementales, liées à une action du conducteur du véhicule, et des conditions dites sécuritaires, liées au fonctionnement du véhicule.

En particulier, lesdites conditions comportementales comprennent, séparément ou en combinaison, une action sur un moyen d'activation/désactivation de la commande d'arrêt du moteur thermique, une fermeture de la porte du conducteur, une présence du conducteur dans le véhicule si la porte du conducteur a été ouverte, une fermeture du capot du véhicule, une vitesse du véhicule inférieure à une vitesse donnée, un levier de vitesse dans une position neutre et la pédale d'embrayage relâchée, une vitesse minimale atteinte du véhicule depuis l'arrêt précédent, et, si le véhicule est équipé d'un dispositif de climatisation activé, une température du véhicule comprise dans une plage de température donnée.

S'agissant plus spécialement de la détection de la présence du conducteur dans le véhicule, l'invention prévoit que cette détection est validée et donc que le conducteur est considéré comme présent dans le véhicule si au moins l'une des conditions suivantes est réalisée :
- une ceinture de sécurité du conducteur est bouclée,
- une clé de contact est actionnée en position démarrage,
- la séquence suivante est effectuée : une pédale d'embrayage est complètement enfoncée, un levier de vitesse est engagé dans une position non neutre et la pédale d'embrayage est relâchée.

Selon l'invention, lesdites conditions sécuritaires comprennent, séparément ou en combinaison, une température de l'électronique d'une machine électrique tournante couplée audit moteur thermique inférieure à une température donnée, une vitesse du moteur thermique inférieure à une vitesse donnée, l'absence d'une interdiction d'un ordre de redémarrage, et une expiration d'un délai donné après un échec d'arrêt du moteur thermique.

Conformément à l'invention, lesdites conditions variables comprennent, séparément ou en combinaison, un état de charge de batterie suffisant, une température du moteur thermique supérieure à une température donnée, et une expiration d'une pause de durée variable avec la vitesse maximale atteinte depuis une phase d'arrêt précédente.

En outre, l'invention concerne également l'exécution des ordres d'arrêt du moteur thermique, demandée à un contrôle moteur du moteur thermique lorsque toutes les conditions d'arrêt, qu'elles soient stationnaires ou variables, sont testées et vérifiées comme vraies.

L'invention prévoit alors d'émettre une demande de redémarrage du moteur thermique si la vitesse du moteur thermique reste supérieure à une vitesse donnée à l'intérieur de ladite fenêtre de surveillance.

L'invention prévoit également de n'émettre un nouvel ordre d'arrêt en cas d'échec d'un premier ordre d'arrêt qu'après expiration d'un intervalle de temps donné, ceci de manière à permettre de corriger l'anomalie ayant conduit à l'échec du premier ordre d'arrêt.

Enfin, selon un mode de fonctionnement de l'invention dit « redémarrage réflexe », on émet un ordre de redémarrage pendant une phase d'arrêt si lesdites conditions d'arrêt ne sont plus vérifiées. Le redémarrage est alors demandé avant l'arrêt complet du moteur dès lors que les conditions d'arrêt ne sont plus toutes vérifiées. Cela permet d'avoir un redémarrage rapide.

Selon un deuxième objet de l'invention, l'invention propose une machine électrique tournante comprenant un dispositif de mise en oeuvre du procédé de commande selon l'une quelconque des caractéristiques précédentes.

Selon un troisième objet de l'invention, l'invention propose un dispositif de commande d'arrêt d'un moteur thermique d'un véhicule automobile, caractérisé en ce qu'il comporte :
- des moyens pour décider l'arrêt automatique dudit moteur thermique en fonction, d'une part, de conditions dites stationnaires, sensiblement stables avant une phase d'arrêt, et, d'autre part, de conditions dites variables, susceptibles d'évoluer après un test positif sur les conditions stationnaires et avant une phase d'arrêt,
- des moyens pour tester lesdites conditions stationnaires préalablement aux conditions variables.

De plus, ledit dispositif comporte:
- des moyens pour exécuter une phase d'arrêt si les conditions variables sont vraies.

En outre, le dispositif comporte des moyens pour émettre un signal d'avertissement destiné à informer d'un probable arrêt du moteur thermique, après un test positif desdites conditions stationnaires.

La description qui va suivre en regard des dessins annexés, donnés à titre d'exemples non limitatifs, fera bien comprendre en quoi consiste l'invention et comment elle peut être réalisée.

### Brève description des Figures

La Figure 1 est un schéma illustrant un véhicule automobile dans lequel est mis en oeuvre le procédé de commande selon l'invention.

La Figure 2a est un diagramme illustrant selon un premier mode de réalisation non limitatif une gestion des conditions d'arrêt par un procédé de commande conforme à l'invention.

La Figure 2b est un diagramme illustrant selon un deuxième mode de réalisation non limitatif une gestion des conditions d'arrêt par un procédé de commande conforme à l'invention.

La Figure 2c est un diagramme illustrant selon une variante de réalisation non limitatif une gestion des conditions d'arrêt par un procédé de commande conforme à l'invention.

La Figure 2d est un diagramme illustrant selon une variante d'un troisième mode de réalisation non limitatif une gestion des conditions d'arrêt par un procédé de commande conforme à l'invention.

Les Figures 3a et 3b sont respectivement un diagramme et un chronogramme illustrant un exemple de gestion des conditions sécuritaires liées à la présence d'un conducteur dans le véhicule par le procédé de commande conforme à l'invention.

La Figure 4 est un diagramme donnant un exemple de variations d'un temps de pause avant l'arrêt en fonction de la vitesse du véhicule selon le procédé de commande conforme à l'invention.

La Figure 5 est un diagramme illustrant un exemple de gestion de l'arrêt d'un moteur thermique par le procédé de commande conforme à l'invention.

La Figure 6 est un chronogramme illustrant un exemple d'échec d'un ordre d'arrêt du moteur thermique suivi d'un ordre d'arrêt réussi conformément au procédé de commande de l'invention.

### Description détaillée de modes de réalisation préférentiels de l'invention

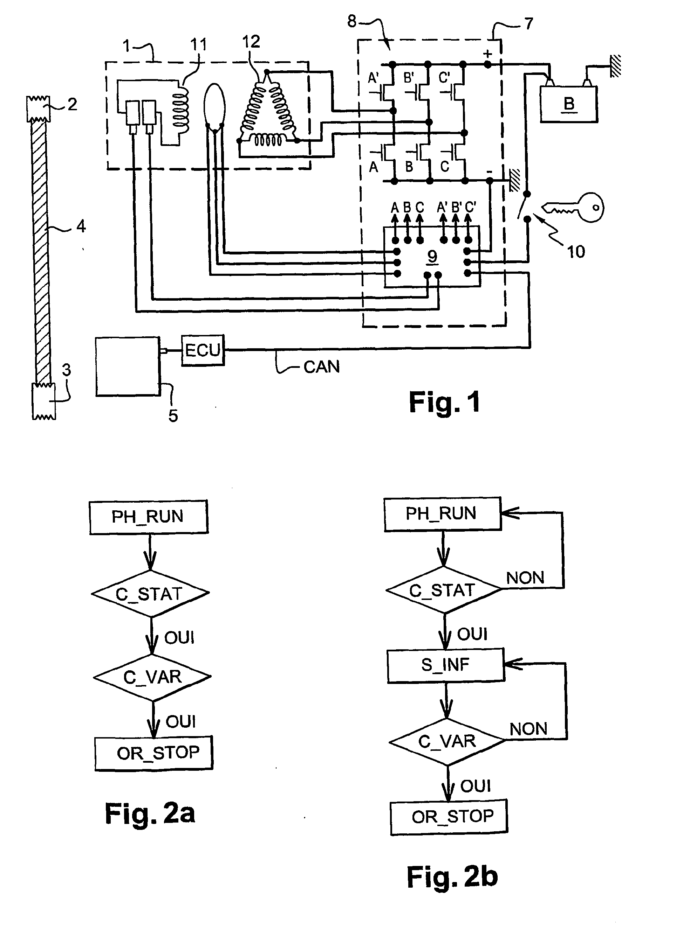

Selon la Figure 1, un véhicule comprend :
- un moteur thermique 5 comportant une unité de contrôle appelé contrôle moteur ECU, ladite unité pouvant également être indépendante dudit moteur thermique, ledit contrôle moteur ECU fournissant notamment la vitesse moteur, la vitesse véhicule et la température thermique moteur,
- une machine électrique tournante séparée 1. Dans la suite de la description, un alterno-démarreur est pris comme exemple non limitatif de machine électrique tournante. Un démarreur classique peut être également pris comme exemple.
   Un tel alterno-démarreur comporte un rotor 11 et un stator 12, un arbre se terminant par une poulie 2 qui est reliée à une poulie 3 du vilebrequin du moteur thermique par l'intermédiaire d'une courroie 4. Cet atterno-démarreur est monté à la place que prend habituellement l'alternateur. D'une manière générale, une machine électrique tournante réversible telle q'un alterno-démarreur cumule deux fonctions distinctes, à savoir, d'une part, la fonction classique d'alternateur lorsque l'arbre du moteur thermique entraîne le rotor 11 de la machine de manière à produire un courant électrique au stator, et, d'autre part, la fonction de démarreur lorsqu'à l'inverse, un courant appliqué au stator de la machine provoque la mise en rotation du rotor, lequel entraîne alors l'arbre du moteur thermique d'une manière analogue à un démarreur classique.
- une électronique de pilotage 7 de l'alterno-démarreur.

L'électronique de pilotage 7 comprend :
- un pont de transistors 8 qui constitue un convertisseur de puissance réversible et qui assure le pilotage en mode démarreur et le redressement synchrone en mode alternateur.
- un module de gestion 9 qui commande les différents transistors (A, B, C, A', B', C') du convertisseur 8 et gère notamment les différentes fonctions suivantes :
   - puissance en modes démarreur et alternateur
   - régulation en mode alternateur
   - transition du mode démarreur au mode alternateur

Le module de gestion 9 est à cet effet alimenté par la tension de la batterie, référencée par B, à laquelle il est relié par l'intermédiaire d'un interrupteur 10 de contact du véhicule. Ledit module de gestion 9 communique avec le contrôle moteur ECU par un bus de communication CAN, ledit bus permettant de remonter des informations telles que notamment la vitesse moteur VM du moteur thermique.

On notera que, selon un mode de réalisation préférentiel non limitatif, la stratégie d'arrêt comprise dans la stratégie « Stop and Go » selon le procédé de commande est téléchargée dans une mémoire flash ou eeprom d'un dispositif de commande tel qu'un microcontrôleur de la machine électrique tournante, ici dans l'alterno-démarreur. Le microcontrôleur se trouve dans le module de gestion 9 de l'alterno-démarreur.

Selon un autre mode de réalisation non limitatif, cette stratégie peut être également téléchargée dans une mémoire d'un dispositif de commande compris dans le contrôle moteur ECU.

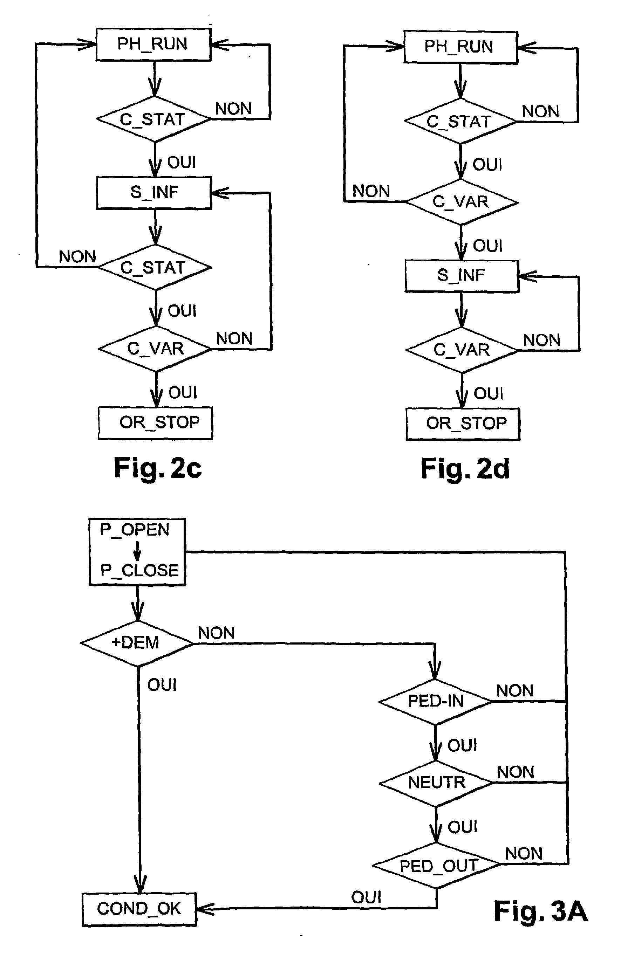

Sur les Figures 2a, 2b, 2c et 2d sont montrés des diagrammes représentant la gestion des conditions d'arrêt par le procédé de commande d'arrêt selon des modes de réalisation préférentiels non limitatifs.

Deux types de conditions d'arrêt du moteur thermique sont considérées : les premières, qualifiées de stationnaires (C_STAT), sont celles qui sont sensiblement stables au sens où elles ne sont pas susceptibles a priori d'évoluer entre le moment où le véhicule est arrêté et le moment où un ordre d'un arrêt est envoyé (début d'une phase d'arrêt). Les secondes, qualifiées ici de variables (C_VAR), peuvent évoluer pendant que le véhicule est arrêté et avant une phase d'arrêt, et donc par exemple devenir vraies si elles ne l'étaient pas au départ, au moment où elles sont testées.

Le procédé de commande gère les conditions de la manière suivante comme illustré à la Figure 2a selon un premier mode de réalisation.
- Lorsqu'on est toujours en phase moteur PH_RUN, c'est-à-dire que le moteur thermique n'est pas arrêté, on teste les conditions stationnaires C_STAT,
- Si les conditions stationnaires sont toutes vraies à la suite d'un test positif, on teste les conditions variables C_VAR.
- Si toutes les conditions variables sont également toutes vérifiées, on lance un ordre d'arrêt OR_STOP du moteur thermique au contrôle moteur ECU du moteur thermique. Une phase d'arrêt est ainsi exécutée. Le contrôle moteur ECU gère l'arrêt du moteur thermique en arrêtant, par exemple, l'injection de carburant dans ledit moteur.

On notera qu'une phase d'arrêt est déterminée par :
- un ordre d'arrêt envoyé au contrôle moteur ECU du moteur thermique qui définit le début de la phase d'arrêt, et
- une vitesse moteur thermique VM inférieure à un certain nombre de tours minutes qui définit que le moteur est arrêté, par exemple de préférence 100 tours/min, définissant ainsi la fin de la phase d'arrêt, ou
- un délai expiré définissant également la fin de la phase d'arrêt comme on le verra en détail plus loin.

On notera que l'on peut décider de ne pas arrêter le moteur thermique dans un premier temps, mais de passer dans un état où le conducteur est informé que son moteur est susceptible de stopper à tout moment.

Ainsi, dans un deuxième mode de réalisation préférentiel, après avoir testé les conditions stationnaires C_STAT et que ces dernières sont toutes vraies à la suite d'un test positif, on informe le conducteur que le moteur peut stopper à tout moment tel qu'illustré à la Figure 2b, puis on teste les conditions variables C__VAR. Cette information d'un arrêt imminent probable est fournie au moyen d'un signal d'avertissement S_INF tel qu'un signal lumineux émis par des diodes électroluminescentes qui clignote par exemple, un signal sonore intermittent ou encore un signal textuel ou symbolique affiché sur le tableau de bord du véhicule dans des exemples non limitatifs. Cet avertissement évite ainsi que le conducteur soit surpris par un tel arrêt automatique.

Dans une première variante de réalisation de ce deuxième mode, on teste de nouveau les conditions stationnaires pendant l'émission du signal d'avertissement et ce avant de tester les conditions variables tel qu'indiqué à la Figure 2c. Ceci permet de s'assurer que les conditions stationnaires n'ont pas évoluées au cours de l'émission du signal d'avertissement, même si cette évolution est très improbable. Une telle évolution peut arriver, par exemple, lorsque le véhicule s'est arrêté arrivé à un feu rouge, mais que le conducteur a passé la première et appuyé sur la pédale d'accélération pour redémarrer, avant que les conditions variables aient été testées.

Dans un troisième mode de réalisation non limitatif, après avoir testé les conditions stationnaires et que ces dernières sont toutes vraies, on teste les conditions variables, puis on informe le conducteur que le moteur peut stopper à tout moment si les conditions variables sont toutes vraies.

Dans une première variante de réalisation du troisième mode, pendant l'émission du signal d'avertissement, on teste de nouveau les conditions variables avant de lancer l'ordre d'arrêt OR_STOP comme illustré à la Figure 2d.

Dans une deuxième variante on peut également tester de nouveau les conditions stationnaires pendant qu'on informe le conducteur et avant d'avoir testé les conditions variables pendant l'émission du signal d'avertissement comme dans le cas de la Figure 2c.

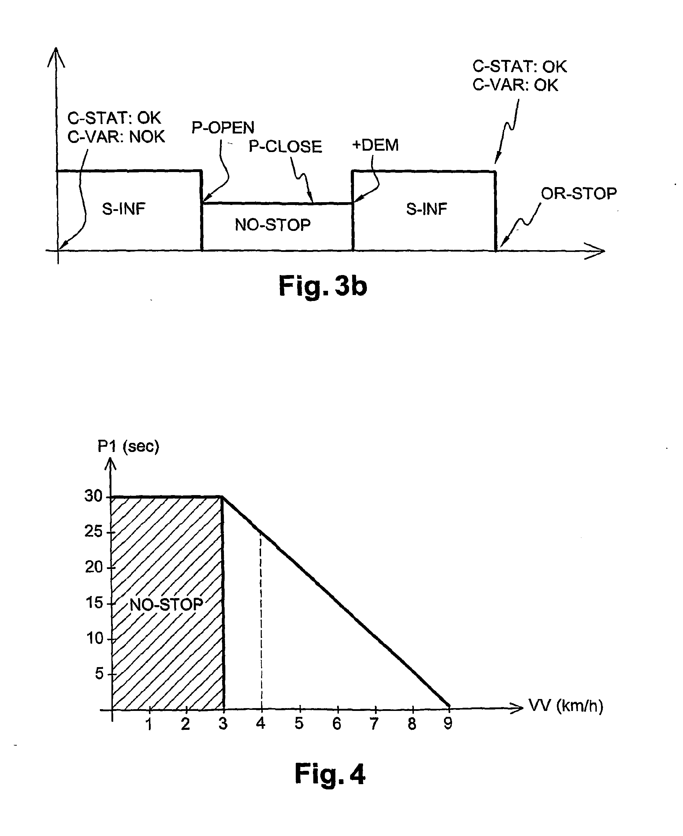

On notera que si les conditions variables ne sont pas vraies (C_VAR : NOK), alors aucun ordre d'arrêt OR_STOP du moteur thermique n'est lancé. Le signal d'avertissement lumineux clignote toujours comme indiqué sur la Figure 3b. Cela permet d'avertir le conducteur que bien qu'il ait demandé un arrêt automatique du moteur thermique, l'arrêt ne s'effectue pas.

**Les conditions d'arrêt stationnaires** C_STAT comprennent des conditions comportementales, liées à une action du conducteur, et des conditions sécuritaires, liées au fonctionnement du véhicule.

Les conditions d'arrêt stationnaires C_STAT sont vraies si toutes les conditions ci-dessous, au choix, sont vraies.

On notera qu'il est possible de choisir plusieurs conditions d'arrêt stationnaires parmi l'ensemble des conditions listées ci-dessous, et que les conditions ainsi choisies doivent toutes être vérifiées.
a) Conditions comportementales :
   - la vitesse du véhicule VV est inférieure à une vitesse donnée représentative de l'arrêt du véhicule, 3 km/h de préférence. Ceci permet de vérifier que le véhicule est arrêté. On considère en effet que si la vitesse du véhicule est inférieure à 3km/h, le véhicule est arrêté.
   - une action sur un moyen d'activation/désactivation de la commande d'arrêt. Ledit moyen d'autorisation est dans un exemple non limitatif un bouton du tableau de bord qui a pour fonction d'activer ou d'inhiber le fonctionnement en « Stop and Go » du moteur thermique. Il doit être dans une position d'activation, le conducteur autorisant ainsi le fonctionnement « Stop and Go ».
   - la porte du conducteur est fermée, ceci permettant d'éviter que le moteur s'arrête alors que le conducteur n'est pas dans le véhicule.
   - la détection du conducteur dans le véhicule est validée.
      Dans le cas où le conducteur a ouvert sa portière alors que les conditions d'arrêt étaient testées, comme on l'a vu précédemment le procédé de commande refuse (NO_STOP) un arrêt tant que la porte est ouverte (P_OPEN, une condition stationnaire fausse, le signal S_INF ne clignote plus), et si elle se referme (P_CLOSE), on cherche à s'assurer que le conducteur est présent dans le véhicule avant d'autoriser à nouveau un arrêt. Le conducteur est considéré comme présent dans le véhicule (COND_OK) si la ceinture de sécurité est bouclée, ou, en l'absence de cette information si, conformément aux Figures 3a et 3b; il actionne la clé en position démarrage (+DEM), ou sinon, dans l'ordre, il presse complètement la pédale d'embrayage (PED_IN), passe le levier de vitesse dans une position non neutre (NEUTR) et relâche la pédale d'embrayage (PED_OUT). Ceci correspond à un ensemble de conditions stationnaires vraies, et donc le signal d'avertissement S_INF clignote.
   - le capot n'est pas ouvert. En effet, s'il est ouvert, on peut penser que le conducteur souhaite observer son moteur, et ne veut donc pas que celui-ci s'arrête.
   - le levier de vitesse est dans la position neutre, et la pédale d'embrayage est relâchée, ce sont en effet des actions que le conducteur effectue s'il veut effectivement stopper le moteur thermique.
   - la vitesse du véhicule a atteint une vitesse minimale, d'au moins 3 km/h par exemple, depuis la dernière phase d'arrêt. Cette condition est appliquée pour que le véhicule ne s'arrête trop souvent, par exemple dans les embouteillages importants, ceci afin d'éviter un impact négatif sur le conducteur. Par exemple, si le moteur thermique stoppe, redémarre, que la vitesse du véhicule atteint 2 km/h, puis retombe à 0, le moteur ne s'arrêtera pas.
   - si la climatisation est allumée, la température du véhicule est située à l'intérieur d'une plage donnée de températures. Dans un premier mode de réalisation, cette température est la température de l'habitacle et la plage donnée se situe entre 15 et 28°C de préférence. Dans un deuxième mode de réalisation, cette température est la température de l'air en sortie d'un évaporateur du système de climatisation, et la plage donnée se situe entre 6 et 8 degrés Celsius. Dans un troisième mode de réalisation, cette température est la température habitacle, et la plage donnée se situe entre 0 et 5 degrés par rapport à la température demandée par le conducteur. Ainsi, si l'écart entre la température demandée et la température habitacle est trop grand (température demandée inférieure à température habitacle de plus de 5 degrés), on interdit tout arrêt du moteur thermique qui entraînerait un arrêt automatique de la climatisation.

   Dans le cas contraire, on refuse l'arrêt. En effet, si la température n'est pas dans cette plage, couper le moteur thermique, et par conséquent la climatisation risque d'entraîner des conditions de confort non acceptables pour l'utilisateur.
b) Conditions sécuritaires :
   - la température de l'électronique de la machine électrique tournante 1, en particulier du substrat du module de gestion 9, est inférieure à une température donnée, représentative de la température limite supportée par les composants dudit module de gestion 9, soit 125°C de préférence. Dans le cas contraire, on refuse un arrêt pour éviter le risque de surchauffe au moment d'un redémarrage.
   - la vitesse du moteur thermique VM est inférieure à une vitesse donnée VSTOP représentative de l'arrêt du véhicule, 100 tours/min de préférence. On s'assure ainsi que le moteur thermique tourne au ralenti, c'est-à-dire que le véhicule est a priori à l'arrêt.
   - une demande de redémarrage ne doit pas être interdite parce qu'un nombre maximal de tentatives de démarrage dans un temps donné pour limiter les risques de surchauffe a été atteint.
   - une expiration d'un délai déterminé entre deux ordres d'arrêt. En effet, dans le cas où un ordre d'arrêt du moteur thermique échoue, à cause d'un problème de communication sur le bus de communication CAN ou d'une mauvaise gestion de l'ordre d'arrêt par le contrôle moteur ECU, un deuxième ordre ne sera possible qu'à l'expiration d'un délai de 10 secondes par exemple. On espère ainsi que le contrôle moteur et/ou le bus de communication seront revenus dans un état de fonctionnement normal.
      **Les conditions d'arrêt variables** C_VAR sont vraies si toutes les conditions ci-dessous, au choix, sont vraies.
      On notera qu'il est possible de choisir plusieurs conditions d'arrêt variables parmi l'ensemble des conditions listé ci-dessous, et que les conditions ainsi choisies doivent toutes être vérifiées.
   - le système de surveillance de la batterie autorise un arrêt ; c'est-à-dire qu'il considère que la batterie est suffisamment chargée pour alimenter le réseau de bord du véhicule après une phase d'arrêt (c'est-à-dire en phase stop) et permettre le redémarrage du moteur thermique, le réseau de bord comprenant les consommateurs tels que l'autoradio ou les phares par exemple.
   - la température du moteur thermique est supérieure à une température donnée, aux alentours de 30°C de préférence, cette température étant représentative du moteur à chaud. On évite ainsi les redémarrages à froid par le machine électrique tournante, ceux-ci sont en effet plus délicats du fait de frottements plus importants entre les différents composants du moteur.
   - un système de pause P1 avant l'arrêt est prévu en fonction de la vitesse véhicule VV atteinte depuis la dernière phase d'arrêt. Il a été vu plus haut que l'arrêt est refusé si le véhicule n'a pas atteint au moins 3 km/h. En outre, s'il n'a pas atteint au moins 9 km/h, l'arrêt n'est autorisé qu'après expiration d'une pause variable avec la vitesse du véhicule maximale atteinte depuis la dernière phase d'arrêt. On évite ainsi que le véhicule ne s'arrête trop souvent dans un embouteillage ou au milieu d'une manoeuvre pour se garer par exemple.
      Le diagramme de la Figure 4 donne un exemple non limitatif de pauses P1 avant l'arrêt en fonction de la vitesse atteinte par le véhicule. En résumé :
   - vitesse du véhicule atteinte depuis le dernier arrêt du moteur thermique inférieure à 3 km/h : pas de nouvel arrêt du moteur thermique NO_STOP (une condition stationnaire non vraie).
   - vitesse du véhicule atteinte depuis le dernier arrêt du moteur thermique comprise entre 3 et 9 km/h: arrêt du moteur thermique après une pause comprise entre 30 et 1 seconde par exemple.
   - vitesse du véhicule atteinte depuis le dernier arrêt du moteur thermique supérieure ou égale à 9 km/h: nouvel arrêt du moteur thermique immédiat autorisé sans délai.

Ainsi, par exemple, si le moteur thermique s'est arrêté complètement (donc on est après la phase d'arrêt), puis a redémarré (phase moteur), et que lors de cette phase moteur, le véhicule s'arrête et est à 0km/h, mais que le moteur ne s'arrête pas. Lorsque le véhicule repart à 4km/h, on aura une pause P1 de 24 secondes avant d'avoir un arrêt du moteur thermique.

On rappellera que la vitesse du véhicule W est définie en Km/h tandis que la vitesse du moteur thermique VM en tours/min.

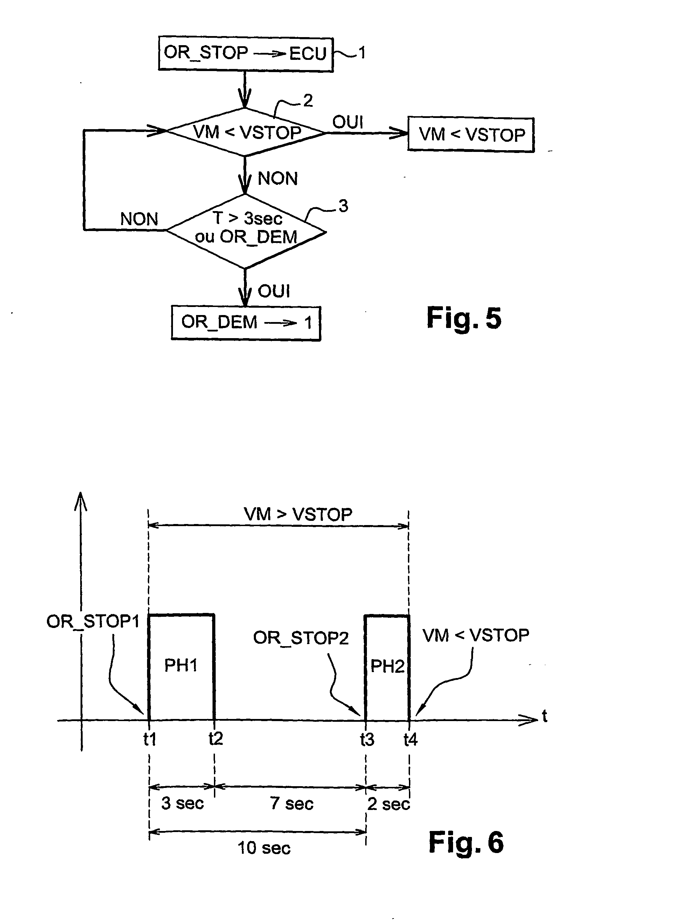

Après avoir établi les différentes conditions vérifiées par le procédé de commande selon l'invention pour décider d'un arrêt du moteur thermique, il convient maintenant de présenter comment un arrêt du moteur thermique est effectué en pratique après une décision d'arrêt validée par ledit procédé, c'est-à-dire toutes les conditions stationnaires et préalables sont vraies. Ceci est illustré à la Figure 5.

**Dans une première étape 1)**, on entre dans une phase d'arrêt et on envoie un ordre d'arrêt OR_STOP au contrôle moteur ECU.

Au même moment, on ouvre une fenêtre de surveillance de la vitesse du moteur thermique pendant une durée donnée de 3 secondes de préférence. On considère que de façon empirique si le moteur ne s'est pas arrêté au bout de 3 secondes, il y a eu un problème. Un moteur s'arrête en général au bout de environ 1 seconde.

**Dans une deuxième étape 2)**, on vérifie que la vitesse moteur thermique VM est inférieure à une vitesse VSTOP donnée représentative d'un arrêt du moteur thermique, soit de préférence VSTOP égale à 100 tours par minutes.

On estime que le moteur thermique est effectivement arrêté dès que sa vitesse devient inférieure à 100 tours par minute.

**Dans une troisième étape 3)**, on vérifie si l'ordre d'arrêt OR_STOP a échoué ou non.

On considère que l'ordre d'arrêt n'a pas échoué si le moteur thermique s'est arrêté (VM < VSTOP). C'est la fin de la phase d'arrêt.

Par contre, on considère que l'ordre d'arrêt a échoué dans les cas préférentiels suivants.

Ainsi, si après un délai T de 3 secondes, la vitesse du moteur VM est toujours supérieure à VSTOP = 100 tours par minute, on estime que l'ordre d'arrêt a échoué. La phase d'arrêt est alors arrêtée. Cette circonstance peut survenir en cas de problème de communication sur le bus CAN, de mauvaise interprétation de l'ordre d'arrêt par le contrôle moteur ECU...

L'ordre d'arrêt peut échouer également en raison d'un ordre de redémarrage OR_DEM envoyé avant l'arrêt complet du moteur thermique, c'est-à-dire pendant une phase d'arrêt (entre l'envoi d'un ordre d'arrêt et l'arrêt du moteur thermique VM<100tours/min). Ceci peut arriver si les conditions d'arrêt ne sont plus vraies (par exemple, si le conducteur enfonce la pédale d'embrayage et repasse une vitesse). Ce cas est appelé « redémarrage réflexe ». En général cela concerne de préférence les conditions d'arrêt stationnaires.

**Dans une quatrième étape 4)**, si l'ordre d'arrêt a échoué, on demande alors automatiquement le redémarrage du moteur en envoyant un ordre de redémarrage OR_DEM, de préférence à la machine électrique tournante 1 par l'intermédiaire de son module de gestion 9, ladite machine étant alors configurée dans un mode démarreur permettant de démarrer le moteur thermique.

Un autre ordre d'arrêt ne sera possible qu'après expiration d'un intervalle de temps de 10 secondes par exemple entre les deux ordres d'arrêt pendant lequel on espère ainsi avoir retrouvé des conditions de fonctionnement normales au niveau du contrôle moteur ou du bus de communication. Dans un autre mode de réalisation, l'intervalle est pris entre une fin de première phase d'arrêt déclenchée par un premier ordre d'arrêt et l'envoi d'un deuxième ordre d'arrêt.

Le chronogramme de la Figure 6 donne l'exemple d'un ordre d'arrêt qui a échoué suivie d'une exécution réussie de l'ordre d'arrêt.

Dans cet exemple, à l'instant t1, on reçoit un ordre d'arrêt OR_STOP1 car toutes les conditions stationnaires et variables étaient vraies. On envoie cet ordre au contrôle moteur ECU. L'ordre d'arrêt déclenche le début d'une phase d'arrêt PH1.

Au même instant, on ouvre une fenêtre de surveillance de 3 secondes et on vérifie si la vitesse moteur VM est inférieure à VSTOP = 100 tours/min. Ici, elle est toujours supérieure à 100 tours/min.

A l'instant t2, la fenêtre de surveillance est fermée et la phase d'arrêt est arrêtée. L'ordre d'arrêt OR_STOP1 a échoué.

A l'instant t3, après un délai de 10 secondes à partir de l'envoi du premier ordre d'arrêt OR_STOP1, on autorise l'envoi d'un nouvel ordre d'arrêt OR_STOP2. Une deuxième phase d'arrêt PH2 est déclenchée.

Au même instant, on ouvre une fenêtre de surveillance de 3 secondes et on vérifie si la vitesse moteur VM est inférieure à 100 tours/min, Ici, elle est toujours supérieure à 100 tours/min.

Au bout de 2 secondes, à l'instant t4, la vitesse moteur VM est inférieure à 100 tours/min, la phase d'arrêt PH2 est terminée.

Le moteur thermique est donc arrêté.

Bien entendu, dans le cadre de l'invention, pour avoir accès à certaines informations telles que la température habitacle, température substrat de l'électronique, position des pédales d'embrayage, de frein, d'accélération, position boîte de vitesse, position clef de contact etc.... des capteurs sont utilisés.

## Revendications

1. Procédé de commande d'arrêt d'un moteur thermique d'un véhicule automobile, comportant les étapes de :
- décider l'arrêt automatique dudit moteur thermique en fonction, d'une part, de conditions dites stationnaires, sensiblement stables avant une phase d'arrêt, et, d'autre part, de conditions dites variables, susceptibles d'évoluer après un test positif sur les conditions stationnaires et avant une phase d'arrêt, et
- tester lesdites conditions stationnaires préalablement aux conditions variables, **caractérisé en ce qu'**il comporte également une étapes de :
- ouvrir une fenêtre de surveillance de la vitesse du moteur thermique d'une durée donnée suite à un ordre d'arrêt dudit moteur thermique.

2. Procédé de commande selon la revendication 1, **caractérisé en ce qu'**il comporte une étape supplémentaire de :
- si les conditions variables sont vraies, exécuter une phase d'arrêt.

3. Procédé de commande selon l'une des revendications 1 ou 2, **caractérisé en ce qu'**il comporte une étape supplémentaire de :
- émettre un signal d'avertissement destiné à Informer d'un probable arrêt du moteur thermique, après un test positif desdites conditions stationnaires.

4. Procédé de commande selon l'une des revendications 1 à 3, **caractérisé en ce qu'**il comporte une étape supplémentaire de:
- tester lesdites conditions stationnaires, préalablement à un test des conditions variables, après émission dudit signal d'avertissement.

5. Procédé de commande selon l'une des revendications 3 ou 4, **caractérisé en ce que** ledit signal d'avertissement est un signal lumineux.

6. Procédé de commande selon l'une quelconque des revendications 1 à 5, **caractérisé en ce que** les conditions stationnaires comprennent, séparément ou en combinaison, des conditions dites comportementales, liées à une action du conducteur du véhicule, et des conditions dites sécuritaires, liées au fonctionnement du véhicule.

7. Procédé de commande selon la revendication 6, **caractérisé en ce que** lesdites conditions comportementales comprennent, séparément ou en combinaison, une action sur un moyen d'activation/désactivation de la commande d'arrêt du moteur thermique, une fermeture de la porte du conducteur du véhicule, une détection de la présence du conducteur dans le véhicule si la porte dudit conducteur a été ouverte, une fermeture du capot du véhicule, une vitesse du véhicule inférieure à une vitesse donnée, un levier de vitesse dans une position neutre et la pédale d'embrayage relâchée, une vitesse minimale atteinte- du véhicule depuis l'arrêt précédent, et, si le véhicule est équipé d'un dispositif de climatisation activé, une température du véhicule comprise dans une plage de température donnée.

8. Procédé de commande selon la revendication 7, **caractérisé en ce que** la détection du conducteur dans le véhicule est validée si au moins l'une des conditions suivantes est réalisée :
- une ceinture de sécurité du conducteur est bouclée,
- une clé de contact est actionnée en position démarrage, et
- la séquence suivante est effectuée: une pédale d'embrayage est complètement enfoncée, un levier de vitesse est engagé dans une position non neutre et ladite pédale d'embrayage est relâchée.

9. Procédé de commande selon la revendication 6, **caractérisé en ce que** lesdites conditions sécuritaires comprennent, séparément ou en combinaison, une température de l'électronique d'une machine électrique tournante couplée audit moteur thermique inférieure à une température donnée, une vitesse du moteur thermique inférieure à une vitesse donnée, l'absence d'une interdiction d'un ordre de redémarrage, et une expiration d'un délai donné après un échec d'arrêt du moteur thermique.

10. Procédé de commande selon l'une quelconque des revendications 1 à 9, **caractérisé en ce que** lesdites conditions variables comprennent, séparément ou en combinaison, un état de charge de batterie suffisant, une température du moteur thermique supérieure à une température donnée, et l'expiration d'une pause de durée variable avec la vitesse du véhicule maximale atteinte depuis une phase d'arrêt précédente.

11. Procédé de commande selon l'une quelconque des revendications 1 à 10, **caractérisé en ce qu'**il comporte une étape supplémentaire de :
- émettre une ordre de redémarrage du moteur thermique si la vitesse du moteur thermique reste supérieure à une vitesse donnée à l'intérieur de ladite fenêtre de surveillance.

12. Procédé de commande selon la revendication 11, **caractérisé en ce qu'**il comporte une étape supplémentaire de :
- n'émettre un nouvel ordre d'arrêt en cas d'échec d'un premier ordre d'arrêt, qu'après expiration d'un intervalle de temps donné.

13. Procédé de commande selon l'une quelconque des revendications 1 à 12,
**caractérisé en ce qu'**il comporte une étape supplémentaire de :
- émettre un ordre de redémarrage pendant une phase d'arrêt si lesdites conditions d'arrêt ne sont plus vérifiées.

14. Dispositif de commande d'arrêt d'un moteur thermique d'un véhicule automobile, comportant:
des moyens pour décider l'arrêt automatique dudit moteur thermique en fonction, d'une part, de conditions dites stationnaires, sensiblement stables avant une phase d'arrêt, et, d'autre part, de conditions dites variables, susceptibles d'évoluer après un test positif sur les conditions stationnaires et avant une phase d'arrêt, et
- des moyens pour tester lesdites conditions stationnaires préalablement aux conditions variables,
**caractérisé en ce qu'**il comporte également des moyens pour ouvrir une fenêtre de surveillance de la vitesse du moteur thermique d'une durée donnée suite à un ordre d'arrêt dudit moteur thermique.

15. Dispostif de commande selon la revendication 14, **caractérisé en ce qu'**il comporte en outre :
- des moyens pour exécuter une phase d'arrêt si les conditions variables sont vraies.

16. Dispositif de commande selon l'une des revendications 14 ou 15,
**caractérisé en ce qu'**il comporte en outre :
- de moyens pour émettre un signal d'avertissement destiné à informer d'un probable arrêt du moteur thermique, après un test positif desdites conditions stationnaires.

17. Machine électrique tournante comprenant un dispositif de mise en oeuvre du procédé de commande selon l'une quelconque des revendications 1 à 13.

## Claims

1. Method for controlling the stopping of a thermal engine of a motor vehicle, comprising the steps of:
- deciding on the automatic stopping of the said thermal engine according on the one hand to so-called steady conditions, substantially stable before a stop phase, and on the other hand so-called variable conditions liable to change after a positive test on the steady conditions and before a stop phase, and
- testing the said steady conditions prior to the variable conditions, **characterised in that** it also comprises a step of:
- opening a window for monitoring the speed of the thermal engine of a given duration hollowing an order to stop the said thermal engine.

2. Control method according to claim 1, **characterised in that** it comprises a supplementary step of:
- if the variable conditions are true, executing a stop phase.

3. Control method according to one of claims 1 or 2, **characterised in that** it comprises a supplementary step of:
- sending a warning signal intended to inform of a probable stopping of the thermal engine after a positive test on said steady conditions.

4. Control method according to one of claims 1 to 3, **characterised in that** it comprises a supplementary step of:
- testing the said steady conditions, prior to a test on the variable conditions, after sending the said warning signal.

5. Control method according to one of claims 3 or 4, **characterised in that** the said warning signal is a light signal.

6. Control method according to any one of claims 1 to 5, **characterised in that** the steady conditions comprise, separately or in combination, so-called behavioural conditions relating to an action of the driver of the vehicle and so-called safety conditions relating to the functioning of the vehicle.

7. Control method according to claim 6, **characterised in that** the said behavioural conditions comprise, separately or in combination, an action on a means of activating/deactivating the thermal engine stop control, a closure of the driver's door of the vehicle, a detection of the presence of the driver in the vehicle if the door of the said driver has been opened, a closure of the bonnet of the vehicle, a speed of the vehicle slower than a given speed, a gear lever in a neutral position and the clutch pedal released, a minimum speed reached on the vehicle since the previous stopping, and, if the vehicle is equipped with an activated air conditioning device, a temperature of the vehicle lying within a given temperature range.

8. Control method according to claim 7, **characterised in that** the detection of the driver in the vehicle is validated if at least one of the hollowing conditions is fulfilled:
- a safety belt of the driver is fastened,
- an ignition key is actuated in the starting position, and
- the hollowing sequence is performed: a clutch pedal is completely pressed down, a gear lever is engaged in a non-neutral position and the said clutch pedal is released.

9. Control method according to claim 6, **characterised in that** the said safety conditions comprise, separately or in combination, a temperature of the electronics of a rotary electrical machine coupled to the said thermal engine bellow a given temperature, a speed of the thermal engine less than a given speed, the absence of the prevention of a restarting instruction, and an expiry of a given time after a failure to stop the thermal engine.

10. Control method according to any one of claims 1 to 9, **characterised in that** the said variable conditions comprise, separately or in combination, a sufficient battery charge state, a temperature of the thermal engine above a given temperature, and the expiry of a pause with a duration variable with the maximum speed of the vehicle reached since a previous stop phase.

11. Control method according to any one of claims 1 to 10, **characterised in that** it comprises a supplementary step of:
- sending an instruction to restart the thermal engine if the speed of the thermal engine remains above a given speed within the said monitoring window.

12. Control method according to claim 11, **characterised in that** it comprises a supplementary step of:
- sending a new stop instruction in the event of failure of a first stop instruction only after the expiry of a given interval of time.

13. Control method according to any one of claims 1 to 12, **characterised in that** it comprises a supplementary step of:
- sending a restart instruction during a stop phase if the said stop conditions are no longer satisfied.

14. Device for controlling the stopping of a thermal engine of a motor vehicle, comprising:
- means for deciding on the automatic stopping of the said thermal engine according on one hand to so-called steady conditions, substantially stable after a stop phase, and on the other hand so-called variable conditions liable to change after the positive test on the steady conditions and before a stop phase, and
- means for testing the said steady conditions prior to the variable conditions, **characterised in that** it also comprises means for opening a window for monitoring the speed of the thermal engine of a given duration hollowing an order to stop the said thermal engine.

15. Control device according to claim 14, **characterised in that** it also comprises:
- means for executing a stop phase if the variable conditions are true.

16. Control device according to one of claims 14 or 15, **characterised in that** it also comprises:
- means for sending a warning signal intended to inform of a probable stopping of the thermal engine, after a positive test on the said steady conditions.

17. Rotary electrical machine comprising a device for implementing the control method according to any one of claims 1 to 13.

## Patentansprüche

1. Verfahren zur Steuerung der Abschaltung eines Verbrennungsmotors eines Kraftfahrzeugs, das die folgenden Verfahrensschritte umfasst:
- Entscheidung die automatische Abschaltung des besagten Verbrennungsmotors in Abhängigkeit einerseits von sogenannten feststehenden, in etwa stabilen Bedingungen vor einer Abschaltphase und andererseits von sogenannten veränderlichen Bedingungen, die sich nach einem positiven Test der feststehenden Bedingungen und vor einer Abschaltphase verändern können, und
- Testen der feststehenden Bedingungen vor den veränderlichen Bedingungen,
**dadurch gekennzeichnet, dass** es außerdem einen Verfahrensschritt umfasst, der darin besteht,
- ein Überwachungsfenster für die Drehzahl des Verbrennungsmotors während einer gegebenen Dauer im Anschluss an einen Befehl zum Abschalten des besagten Verbrennungsmotors zu öffnen.

2. Steuerungsverfahren nach Anspruch 1, **dadurch gekennzeichnet, dass** es einen zusätzlichen Verfahrensschritt der darin besteht,
- eine Abschaltphase auszuführen, wenn die veränderlichen Bedingungen wahr sind.

3. Steuerungsverfahren nach der Ansprüche 1 der 2, **dadurch gekenntzeichnet, dass** es einen zusätzlichen Verfahrensschritt umfasst, der darin besteht,
- ein Warnsignal auszugeben, um über eine wahrscheinliche Abschaltung des Verbrennungsmotors nach einem positiven Test der besagten feststehenden Bedingungen zu informieren.

4. Steuerungsverfahren nach einem der Ansprüche 1 bis 3, **dadurch, gekennzeichnet, dass** es einen zusätzlichen Verfahrensschritt umfasst, der darin besteht,
- nach der Ausgabe des besagten Warnsignals die besagten feststehenden Bedingungen vor einem Test der veränderlichen Bedingungen zu testen.

5. Steuerungsverfahren nach einem der Ansprüche 3 der 4, **dadurch gekennzeichnet, dass** sich bei dem besagten Warnsignal um ein Leuchtsignal handelt.

6. Steuerungsverfahren nach einem der Ansprüche 1 bis 5, **dadurch gekennzeichnet, dass** die feststehenden Bedingungen, getrennt oder in Kombination, sogenannte Vorhaltensbedingungen, die mit einer Aktion des Fahrzeugführers zusammenhängen, und sogenannte Sicherheitsbedingungen umfassen, die mit dem Betrieb des Fahrzeugs zusammenhängen.

7. Steuerungsverfahren nach Anspruch 6, **dadurch gekennzeichnet, dass** die Verhaltensbedingungen, getrennt oder in Kombination, folgende Punkte umfassen: Einwirkung auf ein Mittel zur Aktivierung/Deaktivierung des Befehls zum des Verbrennungsmotors, geschlossener Zustand der Fahrertür des Fahrzeugs, Erfassung der Anwesenheit des Fahrers im Fahrzeug, wenn die Fahretür geöffnet wurde, geschlossener Zustand der Motorhaube des Fahrzeugs, Geschwindigkeit des Fahrzeugs niedriger als eine gegebene Geschwindigkeit, in in Leerlaufstellung und Kupplungspedal losgelassen, Minimalgeschwindigkeit des Fahrzeugs seit der vorangehenden Abschaltung erreicht und, wenn das Fahrzeug mit einer eingeschalteten Klimaanlage ausgerüstet ist, Temperatur des Fahrzeugs in einem vorgegebenen Temperaturbereich.

8. Steuerungsverfahren nach anspruch 7, **dadurch gekennzeichnet, dass** die der Anwesenheit des Fahrers im Fahrzeug validiert ist, wenn mindestens eine der folgenden Bedingungen erfüllt ist:
- Sicherheitsgurt des Fahrers angelegt,
- Zündschlüssel in Startposition betätigt und
- folgende Sequenz durchgeführt: Kupplungspedal ganz durchgetreten, Schalthebel in eine andere Position als Leerlaufstellung und Kupplungspedal wieder losgelassen.

9. Steuerungsverfahren nach Anspruch 6, **dadurch gekennzeichnet, dass** die besagten feststehenden Bedingungen, getrennt oder in Kombination, die folgenden Punkte umfassen: Temperatur der Elektronik einer an den besagten Verbrennungsmotor angeschlossenen rotierenden elektrischen Maschine niedriger als eine gegebene Temperatur, des Verbrennungsmotor niedriger als eine gegebene Drehzahl, Nichtvorliegen einer Sperre für einen Wiederanlassbefehl und Ablauf einer gegebenen Zeitspanne nach einer fehlgeschlagenen der

10. Steuerungsverfahren nach einem der Ansprüche 1 bis 9, **dadurch gekennzeichnet, dass** besagten veränderlichen Bedingungen, getrennt in Kombination, die folgenden Punkte umfassen: ausreichender Ladezustand der Batterie, des Verbrennungsmotors höher als eine gegebene Tempeund Ablauf einer Pause, deren Dauer mit der erreichten Maximalgeschwindigkeit des Fahrzeugs seit einer vorangehenden Abschaltphase variiert,

11. Steuerungsverfahren nach einem der Ansprüche 1 bis 10, **dadurch gekennzeichnet, dass** es einen zusätzlichen Verfahrensschritt umfasst, der darin besteht,
- innerhalb des besagten Überwachungsfensters einen Befehl zum Wiederanlassen des Verbrennungsmotors auszugeben, wenn die Drehzahl des Verbrennungsmotors über einer gegebenen Drehzahl bleibt.

12. Steuerungsverfahren nach Anspruch 11, **dadurch gekennzeichnet, dass** es einen zusätzlichen Verfahrensschritt umfasst, der darin besteht,
- einen neuen Abschaltbefehl nach einem fehlgeschlagenen ersten Abschaltbefehl erst nach Ablauf eines gegebenen Zeitintervalls auszugeben.

13. Steuerungsverfahren nach einem der Ansprüche 1 bis 12, **dadurch gekennzeichnet, dass** es einen zusätzlichen Verfahrensschritt umfasst, der darin besteht,
- einen Wiederanlassbefehi während einer Abschaltphase auszugeben, wenn die besagten Abschaltbedingungen nicht mehr erfüllt sind,

14. Vorrichtung zur Steuerung der Abschaltung eines Verbrennungsmotors eines Kraftfahrzeugs mit:
- Mitteln zur Entscheidung über die automatische Abschaltung des besagten Verbrennungsmotors in Abhängigkeit einerseits von sogenannten feststehenden, in etwa stabilen Bedingungen vor einer Abschaltphase und andererseits von sogenannten veränderlichen Bedingungen, die sich nach einem positiven Test der feststehenden Bedingungen und vor einer Abschaltphase verändern können, und
- Mitteln zum Testen der feststehenden Bedingungen vor den veränderlichen Bedingungen,
**dadurch gekennzeichnet, dass** es außerdem Mittel umfasst, um ein Überwachungsfenster für die Drehzahl des Verbrennungsmotors während einer gegebenen Dauer im Anschluss an einen Befehl zum des besagten Verbrennungsmotors zu öffnen.

15. Steuerungsvorrichtung nach Anspruch 14, **dadurch gekenzeichnet, dass** es außerdem
- Mittel zum eine Abschaltphase auszuführen, wenn die veränderlichen Bedingungen wahr sind.

16. Steuerungsvorrichtung nach der Ansprüche 14 15.
**dadurch gekennzeichnet dass** es außerdem
- Mittel umfasst, um ein Warnsignal auszugeben, um über eine wahrscheinliche Abschaltung des Verbrennungsmotors nach einem positiven Test der besagten feststehenden zu informieren.

17. Rotierende elektrische Maschine mit einer Vorrichtung zur Anwendes Steuerungsverfahrens nach einem der Ansprüche 1 bis 13.
